# EUROPEAN PATENT SPECIFICATION

(11) **EP 3 530 030 B1**
(45) Date of publication and mention of the grant of the patent: **07.12.2022**
(21) Application number: 16919486.7
(22) Date of filing: 21.10.2016
(51) Int. Cl.: H04W 36/00

(54) **IMPROVING HANDOVER EFFICIENCY**
VERBESSERUNG DER ÜBERGABEEFFIZIENZ
AMÉLIORATION D'UNE EFFICACITÉ DE TRANSFERT

(43) Date of publication of application: 28.08.2019
(73) Proprietor: Nokia Technologies Oy, 02610 Espoo (FI)
(72) Inventor: PEDERSEN, Klaus, 9000 Aalborg (DK); KOLDING, Troels, 9270 Klarup (DK); GIMENEZ, Lucas Chavarria, 9000 Aalborg (DK)
(74) Representative: Nokia EPO representatives
(86) International application number: PCT/FI2016/050741
(87) International publication number: WO 2018/073485

(56) References cited:
- EP-A1- 2 693 803
- WO-A1-2014/198295
- WO-A2-2008/042906
- US-A1- 2010 130 209
- US-A1- 2011 014 917
- US-A1- 2014 301 369
- US-A1- 2015 312 815
- US-A1- 2016 192 254

## Description

### FIELD OF THE INVENTION

The invention relates generally to handovers.

### BACKGROUND

It is known that handovers are needed in mobile communications when a user equipment (UE) traverses from one cell to another. It takes time and resources to determine whether a handover to a certain cell is allowable and/or beneficial to the UE. Document US2015312815A discusses handover efficiency.

### BRIEF DESCRIPTION OF THE INVENTION

The invention is defined by the independent claims. Some embodiments of the invention are defined in the dependent claims.

One or more examples of implementations are set forth in more detail in the accompanying drawings and the description below. Other features will be apparent from the description and drawings, and from the claims.

### LIST OF THE DRAWINGS

In the following, the invention will be described in greater detail with reference to the embodiments and the accompanying drawings, in which
Figure 1 presents a network to which embodiments may be applicable to, according to an embodiment;
Figure 2 shows another network to which embodiments may be applicable to, according to an embodiment;
Figure 3 shows a flow diagram;
Figures 4 and 5 illustrate methods, according to some embodiments
Figure 6 depicts a flow diagram according to an embodiment; and
Figures 7 and 8 illustrate apparatuses, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Embodiments described may be implemented in a radio system, such as in at least one of the following: Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system.

The embodiments are not, however, restricted to the system given as an example but a person skilled in the art may apply the solution to other communication systems provided with necessary properties. Another example of a suitable communications system is the 5G concept. 5G is likely to use multiple input - multiple output (MIMO) techniques (including MIMO antennas), many more base stations or nodes than the LTE (a so-called small cell concept), including macro sites operating in co-operation with smaller stations and perhaps also employing a variety of radio technologies for better coverage and enhanced data rates. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave).

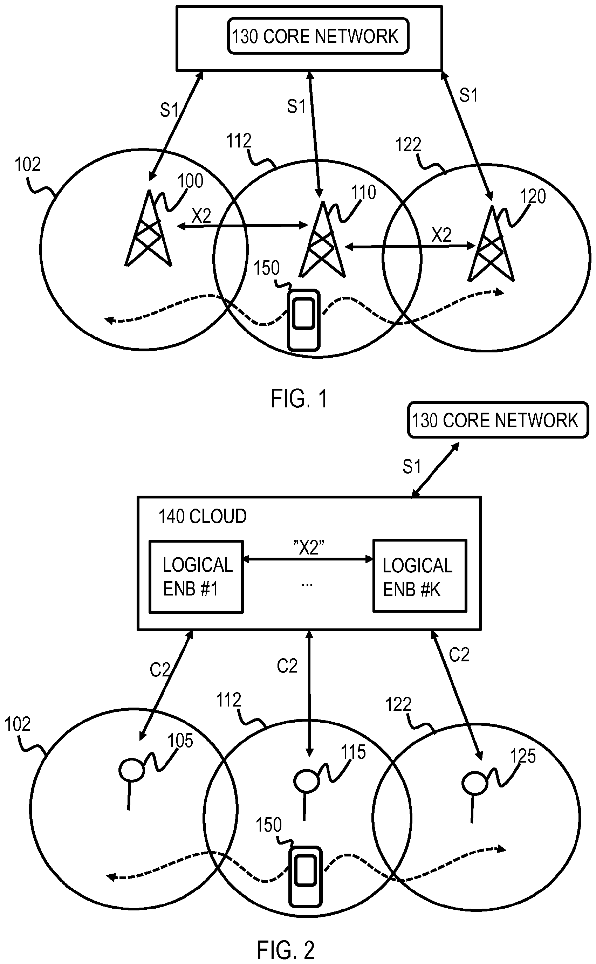

Figure 1 illustrates an example of a communication system to which embodiments of the invention may be applied. The system may comprise at least two access nodes 100, 110 and 120 providing cells 102, 112, 122, respectively. Each cell may be, e.g., a macro cell, a micro cell, femto, or a pico cell, for example. In another point of view, the cell may define a coverage area or a service area of the access node. The access node may be e.g. an evolved Node B (eNB) as in the LTE/LTE-A, or any other apparatus capable of controlling radio communication and managing radio resources within a cell. For 5G solutions, the implementation may be similar to LTE-A, as described above. The access node may be called a base station or a network node. The access nodes may provide user equipment (UE) 150 with wireless access to other networks such as the Internet. The wireless access may comprise downlink (DL) communication from the respective eNB to the UE and uplink (UL) communication from the UE to the respective eNB. Additionally, one or more local area access nodes may be arranged within a control area of a macro cell access node. The local area access node may provide wireless access within a sub-cell that may be comprised within a macro cell. Examples of the sub-cell may include a micro, pico and/or femto cell. Typically, the sub-cell provides a hot spot within a macro cell. The operation of the local area access node may be controlled by an access node under whose control area the sub-cell is provided.

In the case of multiple access nodes in the communication network, the access nodes may be connected to each other with an interface. LTE specifications call such an interface as X2 interface. Other communication methods between the access nodes may also be possible. The access node may be further connected via another interface, called S1, to a core network 130 of the cellular communication system. The LTE specifications specify the core network as an evolved packet core (EPC), and the core network may comprise e.g. a mobility management entity (MME) and a gateway node. The MME may handle mobility of terminal devices in a tracking area encompassing a plurality of cells and also handle signalling connections between the terminal devices and the core network 130. The gateway node may handle data routing in the core network 130 and to/from the terminal devices.

The network architecture as depicted in Figure 1 may be called a distributed radio access network (RAN), or D-RAN, where each cell comprises an access node with capabilities to communicate directly with another access node via e.g. the X2 interface. In distributed RAN, each access node (also called eNB in the application) processes and transmits its own signal to and from the UE, and forwards the data payload to and from the UE and out to the core network.

It should be appreciated that future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of functionalities between core network operations and base station operations may differ from that of the LTE or even be non-existent.

Therefore, a new RAN architecture, depicted in Figure 2, is being developed that splits baseband processing functions between an antenna site (e.g. remote radio head) 105, 115, 125 and a central processing site 140 (e.g. a server). This architecture can be called a Cloud RAN, since the cloud 140 is the central element managing plurality of antenna sites (also called RF sites). Other names for this type of architecture include C-RAN or centralized RAN. In an embodiment, there is proposed a split with non-realtime (NRT) processing in the cloud and realtime (RT) processing at the antennas sites (a.k.a. radio frequency, RF site). The cloud 140 may comprise logical eNBs. There may be one to one correspondence between the antenna sites 105, 115, 125 and the logical eNBs, or one eNB may serve many antenna sites.

As show in Figure 1, the traditional D-RAN architecture has eNBs 100, 110, 120 that are self-contained and inter-connected with the X2 interface (physical path of interface could be direct or go through an aggregation hub in the transport network). The S1 interface then connects the eNBs 100, 110, 120 to the core network 130. On the contrary, in the multi-layer Cloud D-RAN architecture shown in Figure 2, part of the eNB functionality is delivered from the cloud 140 comprising a data center (a.k.a. a cloud edge). The remaining part of the eNB functionality can be distributed still to the cell sites 105, 115, 125, but now the distributed entity is no longer a self-contained eNB. E.g. in one embodiment, only real-time (RT) portions are distributed to the cell sites 105, 115, 125 while all non-realtime (NRT) portions are located in the Cloud (more particular in the Cloud Edge). The baseband processing elements of the cloud 140 and of the antenna sites 105, 115, 125 may communicate via a new interface, referred as the C2 in the following (to separate it from X2 and S1 interfaces).

While the following description is mainly written in the context of the cloud RAN architecture of Figure 2, it is also applicable to the Distributed RAN architecture of Figure 1

Let us consider handovers. The terms handover or handoff refers to the process of transferring an ongoing call or data session from one channel connected to the core network to another channel. Often this requires changing the serving cell from a source cell to a target cell due to mobility of the UE 150 (possible mobility options requiring handover to another cell are depicted with dotted lines in Figures 1 and 2). Thus, it can be assumed that a source cell is the serving cell for the UE prior to the handover (e.g. cell 102 to the UE 150 in Figures 1 and 2), and therefore also the cell having buffered downlink data for the UE 150 (as provided by the cloud 150 that hosts the non-realtime functionalities including e.g. packet data convergence protocol (PDCP) functionalities, radio link control (RLC) functionalities, as well as layer 3 functionalities). The Cloud 140 takes care of buffer management towards connected cells 102, 112, 122 and handles the connection to the core network 130 (e.g. S1 in LTE).

When dividing the baseband functionality into the two parts as described above and inserting a latency tolerant interface C2 between them, many of the radio protocols are impacted, and care has to be taken to ensure optimal radio performance and preserving the benefit of the multi-layer Cloud RAN architecture. Therefore, in some embodiments, downlink user-plane buffer handling and total preparation and execution time for synchronous handovers are considered. Tight buffer handling is of higher importance in the multi-layer Cloud RAN than in the traditional Distributed RAN architecture as the handover control element (radio resource control, which may be situated in the cloud 140) may see a latency towards the distributed processing element (e.g. realtime physical and medium access control, MAC, procedure) sitting at the RF site 105, 115, 125. Latencies between the two can be significant, e.g. 10 ms round-trip-time (RTT) which impacts significantly the performance of e.g. synchronous handovers.

The concept of synchronous handovers means a handover without random access (RA). This is also known as synchronous RA-less handover. One of the principles is that the involved source and target cell agrees on the time instant of the handover, and informs the UE in advance of that. Until the time of the handover, the UE continues to listen to the source cell (and receives data when scheduled). At the time of the handover, the UE immediately starts to listen to the target cell - and receives data when scheduled. From a physical (PHY) and/or MAC perspective, this implies that the data interruption time during the handover process is limited to in principle only a fraction of a transmission time interval (TTI). However, in a multi-layer Cloud RAN procedure, effective buffer management and flow switching between the source and target cell needs to be supported that takes into account the network latencies of the new architecture.

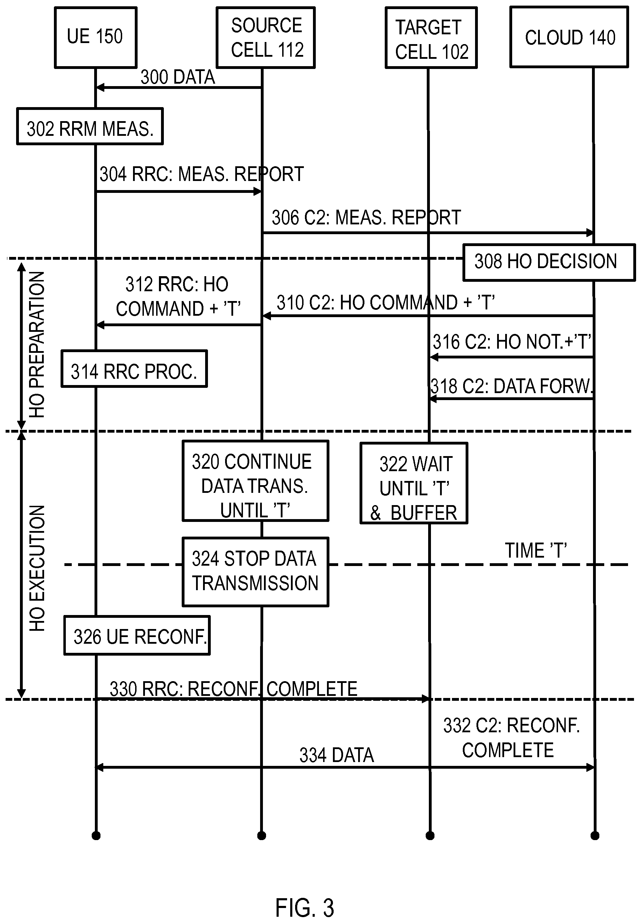

To better understand this latency aspects, consider Figure 3. There is shown a mapping of the synchronous handover protocol to the Multi-layer Cloud D-RAN architecture of Figure 2. The Cloud 140 holds the centralized eNB components. For this example no assumptions are made related to whether the two physical cells (source and target) are combined under the same logical eNB (one of #1, ... #K) in the Cloud 140 or whether the two cells belong to two different logical eNBs. If on different logical eNBs, there may be a software-defined "X2" interface as shown in Figure 2 that has low latency and high bandwidth as both eNBs run on the same physical platform. Therefore, it may be assumed that the cells (source and target) are managed by a same computer in the cloud 140, with no or negligible latency. Even though the description of the application may in some occasions say that the source cell or target cell makes an action, it is clear to a skilled person that the action is performed by a corresponding node/element of the source cell 112 or the target cell 102/122, e.g. the eNB 110 or the antenna site 115 of the source cell, or the eNB 100/120 or the antenna site 105/125 of the target cell.

In an embodiment of Figure 3, the source cell (e.g. the cell 112) sends data to the UE 150 in step 300. In step 302, the UE performs radio measurements of neighbouring cells which may comprise all neighbouring cells (e.g. cells 102 and 122). There may be restrictions for the measuring, such as closed subscriber group (CSG) cells which are to be measured only if the UE 150 is allowed to access the CSG cell. After the UE 150 has measured the neighbouring cells, the UE 150 sends and the source cell 112 (in detail, the network node/element 115 of the source cell 112) receives in step 304 a measurement report e.g. on a radio resource control (RRC) channel from the UE 150. Then in step 306, the measurement report is sent to the Cloud 140, at which point a latency of up to 10ms RTT can be inferred.

It is assumed in the following that the received measurement report indicates that the UE 150 is better off being handed over to another cell (e.g. the cell 102 or to cell 122). The Cloud 140 then in step 308 initiates a handover preparation phase by making a (positive) handover decision and by contacting both the source 112 and the target cell (let us assume that the target cell is the cell 102). In particular the nodes 105 and 115 may be contacted. The nodes 105, 115, as described earlier may comprise distributed baseband elements hosting realtime physical and MAC layer functionalities of the cells 102, 112, respectively. In more details, the cloud 140 in step 310 and 312 causes a handover command to be sent to the UE 150 via the C2 interface (step 310) and via the RRC link between the node 115 and UE 150 (step 312). The command may also include an indication of the time 'T', denoting the agreed time of the synchronous handover (T), impacted by communication latencies over the C2 interface connecting the source/target cells with the cloud 140. The command may also comprise uplink allocation for the UE 150. The uplink allocation is for the UE 150 and is valid for transmission to the target cell at the time of the handover (i.e. at the time point T). Consequently, in step 314 the UE 150 makes RRC processing regarding the HO command.

Step 316 may comprise the cloud 140 notifying the target cell 102 about the handover and the time T. The cloud 140 in step 318 performs data forwarding towards the target cell 102, so that the node 105 of the target cell 102 may buffer the downlink data in step 322 until the time point T has been reached. Meanwhile, in step 320, the source cell 112 keeps on transmitting data to the UE 150, since the handover will not be executed until the time T has elapsed / is reached. Time T may be a delay that needs to be waited between the handover command and the time when the UE 150 is finally handed over to the target cell 102, or it may be an absolute time point when the UE 150 is handed over to the target cell 102.

Up till the time T of the handover, the UE 150 continues to receive scheduled data from the source cell's node 115. At the time T of the synchronous handover, the node 115 stops data transmission to the UE 150 in step 324. Thereafter, the UE 150 immediately starts to listen to the target cell 102. The UE 150 makes reconfiguration to the new cell 102 at point 326 and the reconfiguration complete indication is transmitted via the target cell 102 to the cloud 140 in steps 330 and 332. The target cell 102 may also perform TTI alignment for the UE 150, although not shown for simplicity. Since the target cell 102 has already buffered the DL data to the UE 150, the target cell 102 can in step 334 start data transmission to the UE 150.

As can be seen from above, one of the envisaged problems in the illustrated scenario relates to latencies in-built into the system when implementing the synchronous handover directly onto the new architecture. The latency between receiving a measurement report at the source cell until the source cell can communicate the handover command to the UE is long as it includes involving the cloud that only communicates to the source cell via the C2 interface that can have long latencies. One possible solution might be to distribute the handover decision to the access nodes but that might remove the benefit of the C-RAN architecture in terms of reducing the handover preparation time compared to traditional distributed architecture (because the processing of handover decision and admission control can be in C-RAN done in parallel by the same physical entity).

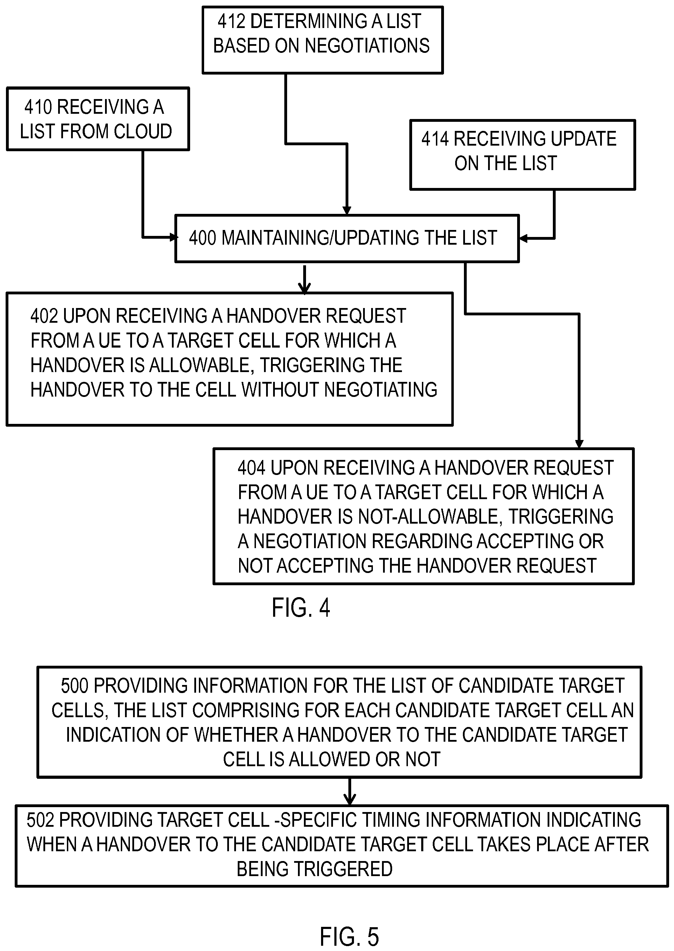

In view of the above mentioned problems, there is proposed a solution that not only maintains the core benefits of the multi-layer cloud RAN (i.e. C-RAN) architecture in terms of synchronous handover but may further improve the performance significantly. Figure 4 depicts a method which may be performed by a network element/node of a source cell 112 (such as the access node 115 of the source cell 112, or the eNB 110 of the source cell 112). The other accompanying Figures may provide further embodiments by describing the method of Figure 2 in details. The following is mainly written with the assumption that the network node of the source cell is the access node 115 (also called e.g. a source node/element or a source cell node/element) acting in the C-RAN architecture of Figure 2, but is applicable to a case where the network node of the source cell is the eNB 110 acting in the D-RAN architecture of Figure 1.

In step 400, the method comprises the source node 115 maintaining a list of candidate target cells for a handover. The candidate target cells (or simply candidate cells or target cells) may comprise e.g. all the neighbouring cells to the source cell 112. The list may be a table, database, matrix, or in whatever form comprising information per cell. The list comprises for each candidate target cell an indication of whether a handover to the candidate target cell is allowed or not. The list may be called an early admission matrix, for example.

Upon receiving a handover request from a UE 150 (locating in the source cell 112) to a candidate target cell for which a handover is determined as allowable in the list, the node 115 may in step 402 trigger the handover to the candidate target cell without negotiating regarding the request with a network element associated with the candidate target cell. The handover that is determined as allowable in the list may be called an early admission control handover, since the admission can be controlled/performed in an early stage, i.e. without discussion whether the request should be allowed or not - the source cell can make the decision by itself immediately after receiving the request. In an embodiment the handover is a synchronous handover. In an embodiment, triggering the handover in step 402 comprises sending a handover command to the UE 150 and sending a handover indication/notification to the network element associated with the candidate target cell.

The network element associated with the candidate target cell may be e.g. the central network element (i.e. the cloud 140 of Figures 2 and 3) controlling a plurality of cells including the source cell 112 and the candidate target cell 102, in which case communication between the source cell 112 and the candidate target cell 102 is via the central network element 140. Alternatively, the network element associated with the candidate target cell may be target cell's eNB 100/120 (of Figure 1) in case of D-RAN of Figure 1. However, as said, for simplicity, let us in the following look at the solution from the C-RAN point of view including the cloud 140.

An example of the list is shown in Table 1 below. The use of the proposed table reduces latencies and may be called an early admission control scheme that enables any source cell to work autonomously in relation to synchronous handovers and bypass latency components (e.g. the C2 interface) of the traditional synchronous handover procedure.

**Table 1: An example of Early Admission Matrix table for source cell with ID 44^{∗∗∗∗}96.**

| Source Cell | Target Cell | Early Admission allowed? | Delay profile (T selection) |
|---|---|---|---|
| 44****96 | 45****65 | Yes | 20 ms |
| 44****96 | 44****22 | Yes | 15 ms |
| 44****96 | 43****44 | No | 12 ms |
| 44****96 | 33****22 | Yes | 17 ms |

Owing to the proposal, the source cell's network node is able to do the admission control without consulting the cloud first. The source cell is allowed to do so, because the cloud has given it a permission to do so. If the proposal is translated into the typical D-RAN solution of Figure 1, then the permission may have been negotiated between the neighbouring eNBs beforehand. As shown in the list of Table 1, the list may comprise for each candidate target cell (in this example four different candidate target cells) an indication of whether the early admission control handover to the candidate target cell is allowed or not (this may be seen under "early admission allowed" -column).

Each source cell under the cloud's control may be provided with a table/list/matrix (where the source cell itself is listed as a source cell) and all the tables are maintained, controlled, and distributed by the cloud 140. The table may include other parameters, e.g. quality of service (QoS) constrained early admission parameters, physical layer parameters of the target cell needed for the source cell to build and possibly include in the handover command, but for simplicity these have been left out from Table 1.

Let us take a closer look at the table through an example. In this example it is assumed that the UE 150 sends a measurement report that it would like to initiate a handover to target cell with ID 44^{∗∗∗∗}22. Upon receiving this request, the source cell with ID 44^{∗∗∗∗}96 may immediately respond positively to the request and start the handover preparation with the UE 150. This is because the list, called as Early Admission Matrix, has a "Yes" in the allowed column, e.g. the cloud 140 knows the availability and load of the requested target cell with ID 44^{∗∗∗∗}22 (from monitoring it and updating the Early Admission Matrix table when needed). For other cells, early admission may not be tolerated, as example early handover preparation towards a target cell with ID 43^{∗∗∗∗}44 is not allowed in the given example.

As shown, the list may be specific to a given source cell. This aids in keeping the size of the cell feasible to be transmitted over the C2 interface since only information relevant to the specific source cell 112 is transmitted, instead of transmitting a large list indicating all source cells.

In an embodiment, the list further comprises, at least for each candidate target cell to which a handover is determined as allowable (and possibly to all listed target cells), a target cell -specific timing information indicating when a handover to the candidate target cell takes place after being triggered. Referring to Figure 3, the timing information may be the 'T' parameter. As said, parameter T may be a delay that needs to be waited between the handover command and the time when the UE 150 is handed over to the target cell, or it may be an absolute time point when the UE 150 is handed over to the target cell. The parameter T may depend on latencies between the route from a given source cell to a given target cell, possibly via the cloud 140. Thus, the interface C2 may play a role when the latency is determined. The cloud 140 may be aware of the latencies via measurements and is able to add/update T to the list under column "Delay profile", shown in Table 1. As said, this value is target cell specific and may vary from target cell to target cell.

In an embodiment, triggering the handover in step 402 further comprises indicating the corresponding timing information T to the UE 150. E.g. if the UE 150 requests handover to the cell with ID 44^{∗∗∗∗}22, the triggering may comprise the source cell element indicating a value of 15 ms to the UE as the parameter T. Then the UE 150 knows that after 15ms, the UE 15 can switch to receive data from the target cell. As described above, in an alternative embodiment, the time T may be given as an absolute time point. This may provide increased reliability, since the time it takes for the UE 150 to correctly receive the HO command may vary, depending on whether e.g. a retransmission is required or not.

In an embodiment, the timing information for a given candidate target cell is based on communication latency between the source cell and the corresponding candidate target cell. As said, there may be a cloud 140 in-between, when the network architecture is according to Figure 2. The latency measurements of transport interfaces to different cells can be conducted periodically or as per "change event" trigger to optimize/determine/update the T-selection values of the table. Therefore, the T may be defined based on the latency of the interfaces, such as the latency of the C2 interface and/or of the X2 interface. The processing capabilities of the relevant nodes participating the handover may play a factor too, since they may result in further latencies.

In an embodiment, the allowability of a handover to a given candidate target cell is based on at least one of the following: load of the candidate target cell, success rate of previous handovers to the candidate target cell.

Regarding the load, the cloud 140 may be aware of those due to load based measurements received from all connected cells (periodic, or event triggered). E.g. if one cell has too high load to blindly receive incoming traffic without "normal" admission control, it may indicate so to the cloud/source cell and the Early Admission Matrix would then include/update all rows with that cell as the target cell to "Not Allowed". On the other hand, if the load in the cell is feasible (under certain load threshold, for example), then the cloud 140 may determine that the early handover admission to that cell as the target cell may be allowed.

Regarding the success rate, each conducted early admission event may be monitored in terms of success rates, to ensure that the table provides for a robust network. E.g. some handover pairs may be too unstable for Early Admission handovers due to instable channel conditions, in which case the list would indicate that handover relating to such a handover pair is not allowed.

It may be noted that the criteria for allowing the early admission handover to the cell comprise aspects related to the time-varying conditions of the target cell in question, and thus the handover allowability status of a given cell may vary in time, e.g. as the traffic condition of the cell varies. In an embodiment, the allowability of a cell is not dependent on the type of the cell, e.g. on the CSG status.

In an embodiment, the list may be generated as a result of a negotiation with at least one network element associated with the candidate target cells prior to the UE 150 requests a handover. E.g. the negotiation may be among many eNBs of neighbouring cells in a distributed RAN of Figure 1, as shown in Figure 4 with reference numeral 412. The negotiation between neighbours may comprise negotiating whether or not a handover from the cell is allowed to the other cell. This information exchange may take place on X2. Based on the information exchange, each eNB 100, 110, 120 may generate its own list, which the cell, when acting as a source cell, may use for responding to UE's handover requests.

Alternatively, in an embodiment, the list may be received from the cloud 140, as shown with reference numeral 410. This allows the cloud 140 to control the Early Admission control behaviour of its source cells by means of distributing the semi-static Early Admission table/list/matrix. When the list comes from the cloud 140, the cloud 140 may generate the list based on knowledge and measurements of cells under the control of the cloud 140 and then distribute to each cell a relevant list where the receiving cell is marked as a source cell, and relevant neighbouring cells are marked as candidate target cells.

In an embodiment, the list is valid for each user equipment in the source cell. Therefore, the source need not maintain a list for each specific UE separately, which may vary due to CSG restrictions per UE, for example. However, it is proposed that the UE already knows its restrictions and does not propose a handover to a cell which is blacklisted for the UE. In other words, the UE has a certain measurement configuration from which the measurement report of steps 302 and 304 is formed, but the UE does not include the blacklisted cells to the measurement report. Alternatively, the source cell knows which cells are blacklisted for each UE, so that the source cell does not allow an early handover to any blacklisted cell.

In an embodiment, the source element 110/115 may receive update information for the list in step 414 from the network element associated with a given candidate target cell. The update may be regarding the early admission handover allowability of the given candidate target cell and/or regarding the timing information of the given candidate target cell. It is also possible to update any other data content of the list. This allows for performance optimization of the network, e.g. optimizing the setting for the handover time (T) based on knowledge of source and target cell conditions. There may be e.g. an outer loop procedure managed by the cloud 140. As the cloud 140 have the "helicopter view" and knows the different cell sites configuration, capabilities, load conditions, etc.., it has all the knowledge to determine when new early admission tables (with updated information) should be pushed to the source cell sites.

Updates of the Early Admission Matrix/list/table may be triggered by predetermined events. E.g. the update may be based on e.g. predetermined changes in a load condition of the cell, predetermined changes in latency conditions, predetermined changes in success rates of previous handovers, or due to establishing a new handover pair (e.g. when a UE requests handover to a target cell not yet in list, the list can be updated with a new pair). Therefore, in one an embodiment, the source node 110/115 may detect that a handover request is to a target cell not included in the list. Consequently the source node may send a message to the cloud (or in general to the network element/node associated with the new target cell), the message including a request for adding the new target cell to the list and responding with an update. The source node may know the network element associated with the new target cell based on the ID of the target cell, for example. As a consequence of any of the updates received by the source cell, the source cell may update the list accordingly, as shown with reference numeral 400 in Figure 4.

Further referring to Figure 4, upon receiving a handover request from the UE 150 to a candidate target cell that is determined as not-allowable, the source node 110/115 may trigger in step 404 a negotiation with the cloud 140 or with the target cell's network node (e.g. the eNB 100) regarding accepting or not accepting the handover request. I.e. the approach of Figure 3 is then used. This provides easy of processing for the source cell's network element in case the early admission cannot be exercised for this specific target cell.

From the point of view of the cloud 140 (in case of C-RAN) or the target cell's network element 100/120 (in case of D-RAN), the method as shown in Figure 5 may comprise providing in step 500, to a network element 115/110 of a source cell 112, information for the list of candidate target cells, the list comprising for each candidate target cell an indication of whether a handover to the candidate target cell is allowed or not. Additionally, a target cell -specific timing information indicating when a handover to the candidate target cell takes place after being triggered may be provided in step 502.

In case of the cloud 140 providing the information, the allowability information may be given for each target cell (from the point of view of the source cell in question) that is under the control of the cloud 140. The timing information may be given to all target cells or only to those that are determined as allowable to keep the required space of the list smaller. On the other hand, providing the delay information to the source node for all target cells may be beneficial because if the previously not-allowed target cell becomes allowed, then the source node already knows the delay value (in case of update is needed, the cloud 140 may provide such). In case of D-RAN, the base station of the target cell providing the information only provides information related to that target cell, since it may not be aware of the allowability and delay (i.e. T) status of any other target cell.

In an embodiment, the information for the list is provided prior to any UE requesting a handover from the source cell. In an embodiment, the list is provided or generated as part of the initial cell configuration setup, or at any time after the cell is switched on (activated). This way the benefits of the proposal with respect to reducing latencies for synchronous handovers can be taken into full advantage.

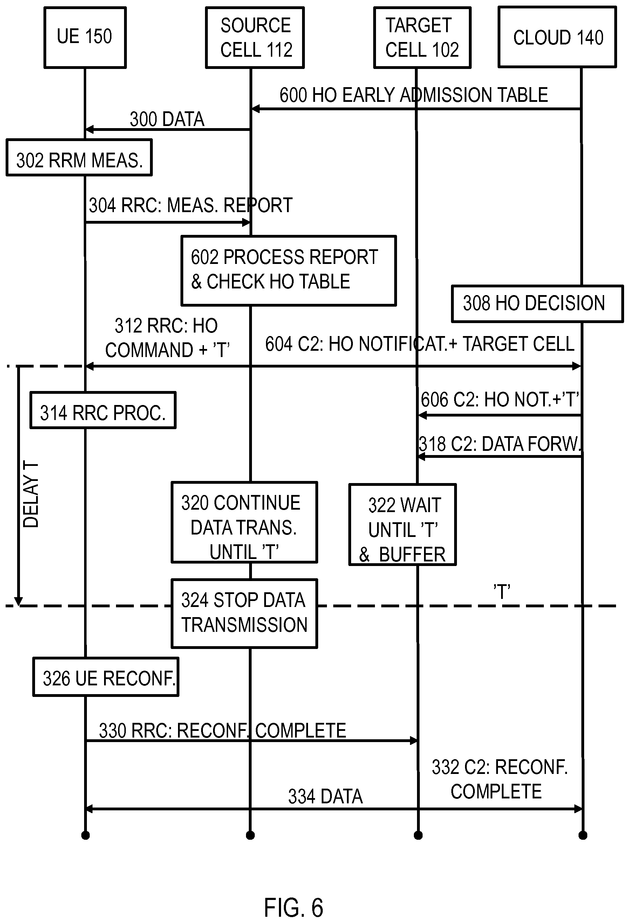

To understand the improvement to the handover procedure that follows from using proposed approach, let us take a look at a flow diagram in Figure 6. Compared to Figure 3, the latency between RRC measurement report received and handover acceptance sent to UE 150 is reduced, due to removing the need to communicate twice (see steps 306 and 310 of Figure 3) over the possibly high-latency C2 interface.

In more details, in step 600 of Figure 6 the cloud 140 provides the handover (HO) early admission table/list to the source cell node 115. Then, after receiving the measurement report in step 304, the source node 115 in step 602 processes the report to see which target cell is the most suitable target cell for the UE 150 and checks the early admission table/list to see if the early admission is allowed for that target cell. Assuming the answer is yes, the source node 115 in step 312 can directly send the HO command to the UE 150 in step 312 without negotiating with the cloud 140 and/or the target cell node 100/120. Also the parameter T may be indicated. A synchronous handover is assumed, without random access in the target cell, so the HO command to the UE 150 does not need to include any RA related info for the target. It is also proposed that the RNTI to be used by the UE 150 in the target cell 102 is pre-reserved, and that the cell parameters of the target cell 102 are known by the source cell (e.g. can be stored as part of the table). Hence, given these conditions, the source node 115 is able to send the HO command without prior communication with the target cell 102.

The source node 115 further notifies the handover to the cloud 140 in step 604 along with indication of the target cell in question. The cloud 140 then notifies in step 606 the target node 105 of the relevant target cell that a handover of this specific UE 150 will take place after the earlier agreed delay T (or at the time T, in case of absolute time instant for the handover instead of delay). The timing information T may be indicated to the target cell 102 in step 606. In an embodiment, the timing information is already known by the target node 105 in which case the timing information T need not be indicated to the target cell at this point. The target node 105 may know the timing T based on its own measurements of channel and traffic conditions of the cell 102, or based on information received from the cloud 140. For simplicity, Figure 6 is depicted so that the timing information T is indicated to the target node 105.

The rest of the procedure runs as described in Figure 3. There may not be a need for the UE 150 to read SIBx information at the target cell 102. This is because the essential carrier parameters of the target cell 102 may in an embodiment be included as part of the HO command of step 312. The cloud 140 may include such parameters required for the UE 150 to access the target cell in the early admission table, although not shown in Table 1. These parameters may be updated as required.

Figure 6 assumes that the early admission handover to the indicated target cell is determined as allowable in the list. As explained earlier, if this is not the case and the early admission to the specific target cell is not allowed, the handover procedure will continue to run as explained in Figure 3.

In an embodiment, if the early admission handover to the most suitable target cell is not allowed, the source node 115 may determine whether the early admission handover is allowable to another target cell for which the early admission handover is allowable. Then the source node 115 may decide, instead of following the process of Figure 3, to command the UE to handover to the other cell instead, assuming the other cell is also a suitable target cell for the UE 150. The source node 115 may know which cell is e.g. the second most suitable based on e.g. the measurement report received from the UE. The UE 150 may be earlier configured to report not only the most suitable target cell, but at least two suitable target cells.

Also it may be worth noting that the Figures 3 and 6 do not, for simplicity, consider any acknowledgement of signals transmitted between the source, cloud, target, and the UE. Such acknowledgement (ACK/NACK) signalling may be nevertheless applied to improve the robustness of the system.

When looking at Figure 6, it is noticeable why timing is an important issue, especially for synchronous handover requests. When the source cell responds back to the UE 150, it may include to the handover command the exact time T when the synchronous handover will take place. The value of T depends on many factors, for instance on the delay profile between the cloud 140 and the source cell 112 and also the delay profile between cloud 140 and the target cell 102. E.g. the Early Admission matrix has some default values from which the source cell may select the value for T. E.g. if you make handover between two cells where there is low latency, it is possible to use a lower value for T to speed up the handover procedure. For other source/target cell pairs, latency may be higher and, thus, a higher value for T may be needed. As explained, owing to the proposal, it is possible to optimize parameter T for each handover pair, instead of having to set a worst-case value across the entire area.

According to simulations, the handover preparation is improved compared to the prior art implementation for various values for C2 RTT latency. It can be seen from the simulations that the proposed scheme significantly improves the handover preparation performance versus both the D-RAN and the C-RAN implementations. Performance improvements are 30-60% depending on interface delays and assumption related to RRC processing time for the UE 150. Naturally exchanging all the relevant information between the cell sites and the cloud in order to push and maintain/update the HO tables does present some complexity. But, it should be noted that this complexity, means that the usual signalling between the source and target cells may be avoided, and also the proposed invention offer latency reductions.

In further embodiment, the interface (C2 in case of C-RAN or X2 interface in case of D-RAN) may be extended to allow for the exchange of Early Admission Matrix/table/list in robust manner as well as for exchanging measurements needed to maintain the tables.

Network Element behaviour may be optimized as well. E.g. there may be certain rules that prevent a given source cell to behave autonomously. One example may be that if the Early Admission Matrix/table/list has not been updated during a certain predetermined time period, the list may be considered as expired and the early admission may not be allowed based on that list. In other words, the list may have an expiration time, which may be renewed or updated when the table is updated. As another and/or additional option, the list may be valid only when certain predefined acknowledgements are respected. For example, the reception of the list from the cloud may require that acknowledgements are sent from the source to the cloud, and possibly also from the cloud to the source, to make sure that any fraudulent behaviour is avoided/reduced.

As explained before, the proposal may be implemented in the distributed RAN architecture to achieve similar benefit but without assumption of cloud RAN. E.g. each source cell would by itself maintain its own Early Admission Matrix by exchanging information with its target cells. E.g. such information would be exchanged across X2 interface. Also behavioural rules for the individual eNBs, if required, may be communicated. In D-RAN it may be that more measurements are need to be exchanged to keep local handover tables up to date. E.g. load measurements may be exchanged regularly between cells. In the cloud RAN architecture, the cloud 140 may already monitor all of its connected cells (including monitoring load by watching user plane traffic going through the cell) and the implementation in C-RAN requires less signalling. Anyway, the benefit of the proposal would still apply to the Distributed RAN case, since the two way communication over the X2 interface between the source and target cell regarding whether or not to allow the handover request may be avoided in cases where early admission handover is allowed for the requested target cell.

It should be noted that the proposal is different from closed subscriber group (CSG) related solutions, where e.g. CSG list indicates which cells a given UE should (or shouldn't) include in a measurements report. However, if the cell is included in the report (because it belongs to the CSG list or because is not included in any blacklist), the network still has to apply the traditional handover decision algorithms and admission control, resulting in latencies which are avoided or at least reduced in the current proposal. Therefore, the current proposed list of Table 1 may be seen as a supplement to this CSG or any other type of "cell filtering", as it affects to those cells that are already in the allowed list. Additionally, the table includes information about the cells that support the early admission mechanism. So, it provides more information than an allowed/blocked cell. It also provides information about what type of handover mechanism (early admission control of Figure 6 or the admission control of Figure 3) should be performed.

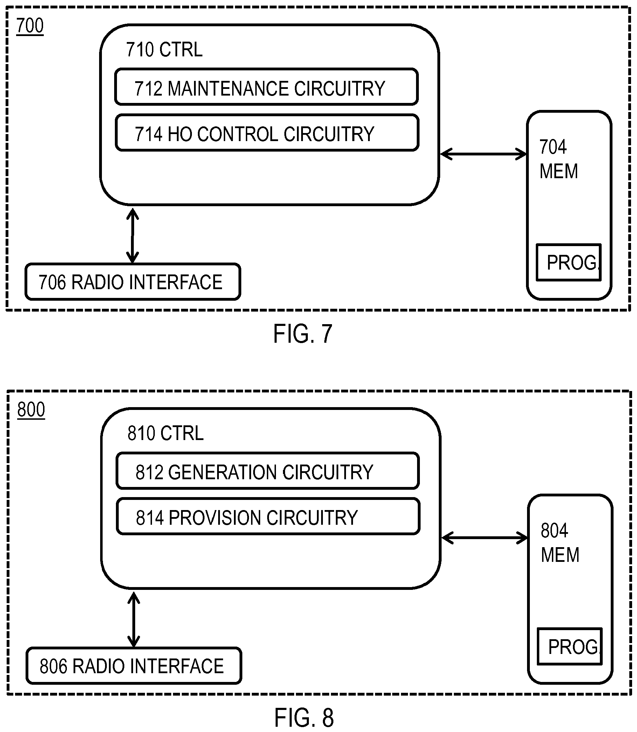

An embodiment, as shown in Figure 7, provides an apparatus 700 comprising a control circuitry (CTRL) 702, such as at least one processor, and at least one memory 704 including a computer program code (PROG), wherein the at least one memory and the computer program code (PROG), are configured, with the at least one processor, to cause the apparatus to carry out any one of the above-described processes. The memory 704 may be implemented using any suitable data storage technology, such as semiconductor based memory devices, flash memory, magnetic memory devices and systems, optical memory devices and systems, fixed memory and removable memory.

In an embodiment, the apparatus 700 may be or be comprised in a base station (also called a base transceiver station, a Node B, a radio network controller, or an evolved Node B, for example). In an embodiment the apparatus is or is comprised in the eNB 110 of the source cell 112.

In an embodiment, the apparatus 700 is comprised in a remote radio head operatively coupled (e.g. via wired or wireless interface) to a control unit, e.g. the central element 140. In an embodiment the apparatus 700 is or is comprised in the access node 115 of the source cell 112.

The apparatus 700 may further comprise communication interface (TRX) 706 comprising hardware and/or software for realizing communication connectivity according to one or more communication protocols. The TRX may provide the apparatus with communication capabilities to access the radio access network and communicate with UEs, for example. The TRX may comprise wireless and/or wired communication capabilities.

The control circuitry 710 may comprise a management circuitry 712 for managing and/or updating/receiving the early admission list according to any of the embodiments. A handover control circuitry 714 may then control the handover admission at least partly based on the list according to any of the embodiments.

An embodiment, as shown in Figure 8, provides an apparatus 800 comprising a control circuitry (CTRL) 802, such as at least one processor, and at least one memory 804 including a computer program code (PROG), wherein the at least one memory and the computer program code (PROG), are configured, with the at least one processor, to cause the apparatus to carry out any one of the above-described processes. The memory 804 may be implemented using any suitable data storage technology, such as semiconductor based memory devices, flash memory, magnetic memory devices and systems, optical memory devices and systems, fixed memory and removable memory.

In an embodiment, the apparatus 800 may be or be comprised in a base station (also called a base transceiver station, a Node B, a radio network controller, or an evolved Node B, for example). In an embodiment the apparatus is or is comprised in the eNB 100/120 of the target cell 102/122.

In an embodiment, the apparatus 800 is comprised in a control unit (e.g. the cloud 140) operatively coupled to a remote radio head. In an embodiment the apparatus 800 is or is comprised in the cloud 140.

The apparatus 800 may further comprise communication interface (TRX) 806 comprising hardware and/or software for realizing communication connectivity according to one or more communication protocols. The TRX may provide the apparatus with communication capabilities to access the radio access network and communicate with UEs, for example. The TRX may comprise wireless and/or wired communication capabilities.

The control circuitry 810 may comprise a generation circuitry 812 for at least partly creating and updating the early admission list according to any of the embodiments. A provision circuitry 814 may then provide information for the list to the source cell(s), according to any of the embodiments

The apparatuses 700, 800 may also comprise user interfaces comprising, for example, at least one keypad, a microphone, a touch display, a display, a speaker, etc. Each user interface may be used to control the respective apparatus by the user.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code may form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/soft-ware including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method, comprising:
maintaining (400), by a network element of a source cell (112), a list of candidate target cells for a synchronous random access -less, RA-less, handover, the list comprising for each candidate target cell (102, 122) an indication of whether a synchronous RA-less handover to the candidate target cell is allowed or not and, for each candidate target cell to which a synchronous RA-less handover is determined as allowable, a target cell-specific timing information indicating when the synchronous RA-less handover to the candidate target cell takes place after being triggered, wherein the timing information for a given candidate target cell is based on communication latency between the source cell and the corresponding candidate target cell; and
upon receiving, by the network element of the source cell (112), a handover request from a user equipment (150) to a candidate target cell for which a synchronous RA-less handover is determined as allowable, triggering (402) the synchronous RA-less handover to the candidate target cell without negotiating regarding the request with a network element associated with the candidate target cell, wherein the triggering comprises transmission of the handover command to the user equipment and sending a handover indication to the network element associated with the candidate target cell, the handover command indicating the corresponding candidate target cell-specific timing information.

2. An apparatus, comprising means for performing at a network element of a source cell (112):
maintaining (400) a list of candidate target cells for a synchronous random access -less, RA-less, handover, the list comprising for each candidate target cell (102, 122) an indication of whether a synchronous RA-less handover to the candidate target cell is allowed or not and, for each candidate target cell to which a synchronous RA-less handover is determined as allowable, a target cell-specific timing information indicating when the synchronous RA-less handover to the candidate target cell takes place after being triggered, wherein the timing information for a given candidate target cell is based on communication latency between the source cell and the corresponding candidate target cell; and
upon receiving a handover request from a user equipment (150) to a candidate target cell for which a synchronous RA-less handover is determined as allowable, triggering (402) the synchronous RA-less handover to the candidate target cell without negotiating regarding the request with a network element associated with the candidate target cell, wherein the triggering comprises transmission of the handover command to the user equipment and sending a handover indication to the network element associated with the candidate target cell, the handover command indicating the corresponding candidate target cell-specific timing information.

3. The apparatus of claim 2, wherein the means are further configured to perform:
upon receiving a handover request from a user terminal to a candidate target cell that is determined as not-allowable, triggering (404) a negotiation with the network element associated with the candidate target cell regarding accepting or not accepting the handover request.

4. The apparatus of any of claims 2 to 3, wherein the list is a result of a negotiation (412) with at least one network element associated with at least one candidate target cell prior to the user equipment requesting a synchronous RA-less handover.

5. The apparatus of any of claims 2 to 4, wherein the allowability of the synchronous RA-less handover to a given candidate target cell is based on at least one of the following: load of the candidate target cell, success rate of previous handovers to the candidate target cell.

6. The apparatus of any of claims 2 to 5, wherein the means are further configured to perform:
receiving (414) update information for the list from the network element associated with a given candidate target cell; and
updating (400) the list accordingly.

7. The apparatus of any of claims 2 to 6, wherein the means are further configured to perform:
detecting that the handover request from the user equipment is to a target cell not included in the list; and
sending a message to a network element associated with the target cell, the message including a request for adding the target cell to the list and responding with an updated list.

8. The apparatus of any of claims 2 to 7, wherein the network element associated with the candidate target cell is a central network element (140) controlling a plurality of cells including the source cell and the candidate target cell, and the communication between the source cell and the candidate target cell is via the central network element.

9. A computer program product embodied on a distribution medium readable by a computer associated with a network element of a source cell (112) and comprising program instructions which, when executed by such a computer, cause the network element of the source cell (112) to perform the steps of the method according to claim 1.

## Patentansprüche

1. Verfahren, das Folgendes umfasst:
Pflegen (400) einer Liste von Zielzellkandidaten für eine synchrone direktzugriffslose, RA-lose Übergabe durch ein Netzwerkelement einer Quellzelle (112), wobei die Liste für jeden Zielzellkandidaten (102, 122) eine Anzeige dazu, ob eine synchrone RA-lose Übergabe an den Zielzellkandidaten zulässig ist oder nicht, und für jeden Zielzellkandidaten, für den bestimmt wird, dass eine synchrone RA-lose Übergabe erlaubt ist, zielzellspezifische Timinginformationen, die anzeigen, wann die synchrone RA-lose Übergabe an den Zielzellkandidaten erfolgt, nachdem sie ausgelöst wurde, umfasst, wobei die Timingsinformationen für einen gegebenen Zielzellkandidaten auf einer Kommunikationslatenz zwischen der Quellzelle und dem entsprechenden Zielzellkandidaten basiert; und
nach Empfangen einer Übergabeanforderung von einer Teilnehmereinrichtung (150) an einen Zielzellkandidaten, für den bestimmt wurde, dass eine synchrone RA-lose Übergabe zulässig ist, durch das Netzwerkelement einer Quellzelle (112) Auslösen (402) der synchronen RA-losen Übergabe an den Zielzellkandidaten, ohne hinsichtlich der Anforderung mit einem Netzwerkelement zu verhandeln, das mit dem Zielzellkandidaten verknüpft ist, wobei das Auslösen eine Übertragung des Übergabebefehls zur Teilnehmereinrichtung und das Senden einer Übergabeanzeige an das Netzwerkelement, das mit dem Zielzellkandidaten verknüpft ist, umfasst, wobei der Übergabebefehl die entsprechenden zielzellkandidatenspezifischen Timinginformationen anzeigen.

2. Vorrichtung, die Mittel zum Durchführen von Folgendem an einem Netzwerkelement einer Quellzelle (112) umfasst:
Pflegen (400) einer Liste von Zielzellkandidaten für eine synchrone direktzugriffslose, RA-lose Übergabe, wobei die Liste für jeden Zielzellkandidaten (102, 122) eine Anzeige dazu, ob eine synchrone RA-lose Übergabe zum Zielzellkandidaten zulässig ist oder nicht, und für jeden Zielzellkandidaten, für den bestimmt wird, dass eine synchrone RA-lose Übergabe erlaubt ist, zielzellspezifische Timinginformationen, die anzeigen, wann die synchrone RA-lose Übergabe an den Zielzellkandidaten erfolgt, nachdem sie ausgelöst wurde, umfasst, wobei die Timinginformationen für einen gegebenen Zielzellkandidaten auf einer Kommunikationslatenz zwischen der Quellzelle und dem entsprechenden Zielzellkandidaten basiert; und
nach Empfangen einer Übergabeanforderung von einer Teilnehmereinrichtung (150) an einen Zielzellkandidaten, für den bestimmt wurde, dass eine synchrone RA-lose Übergabe zulässig ist, Auslösen (402) der synchronen RA-losen Übergabe an den Zielzellkandidaten, ohne hinsichtlich der Anforderung mit einem Netzwerkelement zu verhandeln, das mit dem Zielzellkandidaten verknüpft ist, wobei das Auslösen eine Übertragung des Übergabebefehls zur Teilnehmereinrichtung und das Senden einer Übergabeanzeige an das Netzwerkelement, das mit dem Zielzellkandidaten verknüpft ist, umfasst, wobei der Übergabebefehl die entsprechenden zielzellkandidatenspezifischen Timinginformationen anzeigen.

3. Vorrichtung nach Anspruch 2, wobei die Mittel ferner zu Folgendem ausgelegt sind:
nach Empfangen einer Übergabeanforderung von einem Benutzerendgerät an einen Zielzellkandidaten, die als nicht zulässig bestimmt wird, Auslösen (404) einer Verhandlung mit dem Netzwerkelement, das mit dem Zielzellkandidaten verknüpft ist, hinsichtlich des Akzeptierens oder Nichtakzeptierens der Übergabeanforderung.

4. Vorrichtung nach einem der Ansprüche 2 bis 3, wobei die Liste ein Ergebnis einer Verhandlung (412) mit mindestens einem Netzwerkelement, das mit mindestens einem Zielzellkandidaten verknüpft ist, vor dem Anfordern einer synchronen RA-losen Übergabe durch die Teilnehmereinrichtung ist.

5. Vorrichtung nach einem der Ansprüche 2 bis 4, wobei die Zulässigkeit der synchronen RA-losen Übergabe an einen gegebenen Zielzellkandidaten auf mindestens einem von Folgendem basiert: Last des Zielzellkandidaten, Erfolgsrate von vorherigen Übergaben an den Zielzellkandidaten.

6. Vorrichtung nach einem der Ansprüche 2 bis 5, wobei die Mittel ferner zu Folgendem ausgelegt sind:
Empfangen (414) von Aktualisierungsinformationen für die Liste vom Netzwerkelement, das mit einem gegebenen Zielzellkandidaten verknüpft ist; und
entsprechendes Aktualisieren (400) der Liste.

7. Vorrichtung nach einem der Ansprüche 2 bis 6, wobei die Mittel ferner zu Folgendem ausgelegt sind:
Detektieren, dass die Übergabeanforderung von der Teilnehmereinrichtung an eine Zielzelle erfolgt, die in der Liste nicht beinhaltet ist; und
Senden einer Nachricht an ein Netzwerkelement, das mit der Zielzelle verknüpft ist, wobei die Nachricht eine Anforderung zum Hinzufügen der Zielzelle zur Liste und Antworten mit einer aktualisierten Liste beinhaltet.

8. Vorrichtung nach einem der Ansprüche 2 bis 7, wobei das Netzwerkelement, das mit dem Zielzellkandidaten verknüpft ist, ein zentrales Netzwerkelement (140) ist, das eine Vielzahl von Zellen steuert, die die Quellzelle und den Zielzellkandidaten beinhalten, und die Kommunikation zwischen der Quellzelle und dem Zielzellkandidaten via das zentrale Netzwerkelement erfolgt.

9. Computerprogrammprodukt, das auf einem Verteilungsmedium enthalten ist, das von einem Computer, der mit einem Netzwerkelement einer Quellzelle (112) verknüpft ist, lesbar ist und Programmanweisungen umfasst, die, wenn sie von einem derartigen Computer ausgeführt werden, das Netzwerkelement der Quellzelle (112) veranlassen, die Schritte des Verfahrens gemäß Anspruch 1 durchzuführen.

## Revendications

1. Procédé, comprenant :
le maintien (400), par un élément de réseau d'une cellule source (112), d'une liste de cellules cibles candidates pour un transfert synchrone sans accès aléatoire, RA-less, la liste comprenant pour chaque cellule cible candidate (102, 122) une indication de l'autorisation ou non d'un transfert synchrone RA-less vers la cellule cible candidate et, pour chaque cellule cible candidate vers laquelle un transfert synchrone RA-less est déterminé comme admissible, des informations de synchronisation spécifiques à la cellule cible indiquant quand le transfert synchrone RA-less vers la cellule cible candidate a lieu après avoir été déclenché, dans lequel les informations de synchronisation pour une cellule cible candidate donnée sont basées sur la latence de communication entre la cellule source et la cellule cible candidate correspondante ; et
à la réception, par l'élément de réseau de la cellule source (112), d'une demande de transfert d'un équipement d'utilisateur (150) vers une cellule cible candidate pour laquelle un transfert synchrone RA-less est déterminé comme admissible, le déclenchement (402) du transfert synchrone RA-less vers la cellule cible candidate sans négociation de la demande avec un élément de réseau associé à la cellule cible candidate, dans lequel le déclenchement comprend la transmission de l'ordre de transfert à l'équipement d'utilisateur et l'envoi d'une indication de transfert à l'élément de réseau associé à la cellule cible candidate, l'ordre de transfert indiquant les informations de synchronisation spécifiques à la cellule cible candidate correspondante.

2. Appareil, comprenant des moyens pour réaliser sur un élément de réseau d'une cellule source (112) :
le maintien (400) d'une liste de cellules cibles candidates pour un transfert synchrone sans accès aléatoire, RA-less, la liste comprenant pour chaque cellule cible candidate (102, 122) une indication de l'autorisation ou non d'un transfert synchrone RA-less vers la cellule cible candidate et, pour chaque cellule cible candidate vers laquelle un transfert synchrone RA-less est déterminé comme admissible, des informations de synchronisation spécifiques à la cellule cible indiquant quand le transfert synchrone RA-less vers la cellule cible candidate a lieu après avoir été déclenché, dans lequel les informations de synchronisation pour une cellule cible candidate donnée sont basées sur la latence de communication entre la cellule source et la cellule cible candidate correspondante ; et
à la réception d'une demande de transfert d'un équipement d'utilisateur (150) vers une cellule cible candidate pour laquelle un transfert synchrone RA-less est déterminé comme admissible, le déclenchement (402) du transfert synchrone RA-less vers la cellule cible candidate sans négociation de la demande avec un élément de réseau associé à la cellule cible candidate, dans lequel le déclenchement comprend la transmission de l'ordre de transfert à l'équipement d'utilisateur et l'envoi d'une indication de transfert à l'élément de réseau associé à la cellule cible candidate, l'ordre de transfert indiquant les informations de synchronisation spécifiques à la cellule cible candidate correspondante.

3. Appareil selon la revendication 2, dans lequel les moyens sont en outre configurés pour réaliser :
à la réception d'une demande de transfert d'un terminal d'utilisateur vers une cellule cible candidate qui est déterminé comme non admissible, le déclenchement (404) d'une négociation avec l'élément de réseau associé à la cellule cible candidate concernant l'acceptation ou la non-acceptation de la demande de transfert.

4. Appareil selon l'une quelconque des revendications 2 à 3, dans lequel la liste est un résultat d'une négociation (412) avec au moins un élément de réseau associé à au moins une cellule cible candidate avant que l'équipement d'utilisateur ne demande un transfert synchrone RA-less.

5. Appareil selon l'une quelconque des revendications 2 à 4, dans lequel l'admissibilité du transfert synchrone RA-less vers une cellule cible candidate donnée est basée sur au moins un de ce qui suit : une charge de la cellule cible candidate, un taux de réussite des transferts précédents vers la cellule cible candidate.

6. Appareil selon l'une quelconque des revendications 2 à 5, dans lequel les moyens sont en outre configurés pour réaliser :
la réception (414) d'informations de mise à jour pour la liste de l'élément de réseau associé à une cellule cible candidate donnée ; et
la mise à jour (400) de la liste en conséquence.

7. Appareil selon l'une quelconque des revendications 2 à 6, dans lequel les moyens sont en outre configurés pour réaliser :
la détection du fait que la demande de transfert de l'équipement d'utilisateur est destinée à une cellule cible non incluse dans la liste ; et
l'envoi d'un message à un élément de réseau associé à la cellule cible, le message comportant une demande d'ajout de la cellule cible à la liste et répondant par une liste mise à jour.

8. Appareil selon l'une quelconque des revendications 2 à 7, dans lequel l'élément de réseau associé à la cellule cible candidate est un élément de réseau central (140) commandant une pluralité de cellules comportant la cellule source et la cellule cible candidate, et la communication entre la cellule source et la cellule cible candidate se fait via l'élément de réseau central.

9. Produit de programme informatique incorporé sur un support de distribution lisible par un ordinateur associé à un élément de réseau d'une cellule source (112) et comprenant des instructions de programme qui, lorsqu'elles sont exécutées par un tel ordinateur, amènent l'élément de réseau de la cellule source (112) à réaliser les étapes du procédé selon la revendication 1.
